# EUROPEAN PATENT APPLICATION

(11) **EP 4 273 699 A1**
(43) Date of publication of application: **08.11.2023**
(21) Application number: 23171010.4
(22) Date of filing: 02.05.2023
(51) Int. Cl.: G06F 9/50

(54) **SYSTEM AND METHOD FOR HETEROGENEOUS MEMORY**

(30) Priority: 03.05.2022 US 202263338005 P; 20.04.2023 US 202318304267
(71) Applicant: Samsung Electronics Co., Ltd., Suwon-si, Gyeonggi-do 16677 (KR)
(72) Inventor: PITCHUMANI, Rekha, San Jose, CA 95134 (US); KI, Seok Yang, San Jose, CA 95134 (US)
(74) Representative: Kuhnen & Wacker Patent- und Rechtsanwaltsbüro PartG mbB

(57) **Abstract**

A system and method for heterogeneous memory. In some embodiments, the method includes: receiving, from a first application, a first request for memory; providing a first allocation of memory to the first application; receiving, from a second application, a second request for memory; and providing a second allocation of memory to the second application, the providing of the first allocation including providing, based on a first requirement, of the first application, the first allocation from a first group of memory; the providing of the second allocation including providing, based on a second requirement, of the second application, the second allocation from a second group of memory; the second group of memory having an attribute differing from a corresponding attribute of the first group of memory; and the first requirement being different from the second requirement.

## Description

### FIELD

One or more aspects of embodiments according to the present disclosure relate to computing systems, and more particularly to a system and method for heterogeneous memory.

### BACKGROUND

Computing systems may include various types of memory, and, in some cases, different types of memory having different attributes, such as performance characteristics.

It is with respect to this general technical environment that aspects of the present disclosure are related.

### SUMMARY

According to an embodiment of the present disclosure, there is provided a method, including: receiving, from a first application, a first request for memory; providing a first allocation of memory to the first application; receiving, from a second application, a second request for memory; and providing a second allocation of memory to the second application, the providing of the first allocation including providing, based on a first requirement, of the first application, the first allocation from a first group of memory; the providing of the second allocation including providing, based on a second requirement, of the second application, the second allocation from a second group of memory; the second group of memory having an attribute differing from a corresponding attribute of the first group of memory; and the first requirement being different from the second requirement.

In some embodiments: the receiving, from the first application, of the first request for memory, includes receiving the first request for memory, from the first application, by a first process; and the receiving, from the second application, of the second request for memory, includes receiving the second request for memory, from the second application, by the first process.

In some embodiments: the receiving, from the first application, of the first request for memory, includes receiving the first request for memory, from the first application, by a first process; and the first process includes a user space process.

In some embodiments: the receiving, from the first application, of the first request for memory, includes receiving the first request for memory, from the first application, by a first process; and the first process is a kernel space process.

In some embodiments: the first group of memory includes a first memory device; the second group of memory includes a second memory device; and the method further includes: determining, by a second process, from the first memory device, a first attribute; and determining, by the second process, from the second memory device, a second attribute.

In some embodiments: the receiving, from the first application, of the first request for memory, includes receiving the first request for memory, from the first application, by a first process; the first group of memory includes a first memory device; the second group of memory includes a second memory device; and the method further includes: determining, by a second process, from the first memory device, a first attribute; and sending, by the second process, to the first process, the first attribute.

In some embodiments: the receiving, from the first application, of the first request for memory, includes receiving the first request for memory, from the first application, by a first process; the first group of memory includes a first memory device; the second group of memory includes a second memory device; the method further includes: determining, by a second process, from the first memory device, a first attribute; and sending, by the second process, to the first process, the first attribute; the first process includes a user space process; and the second process includes a user space process.

In some embodiments: the receiving, from the first application, of the first request for memory, includes receiving the first request for memory, from the first application, by a first process; the first group of memory includes a first memory device; the second group of memory includes a second memory device; the method further includes: determining, by a second process, from the first memory device, a first attribute; and sending, by the second process, to the first process, the first attribute; the first process includes a kernel space process; and the second process includes a kernel space process.

In some embodiments: the receiving, from the first application, of the first request for memory, includes receiving the first request for memory, from the first application, by a first process; the first group of memory includes a first memory device; the second group of memory includes a second memory device; the method further includes: determining, by a second process, from the first memory device, a first attribute; and sending, by the second process, to the first process, the first attribute; the first process includes a user space process and a kernel space process; and the second process includes a user space process and a kernel space process.

In some embodiments: the first group of memory includes a first memory device; the second group of memory includes a second memory device; and the method further includes: determining, from the first memory device, a first attribute; and determining, from the second memory device, a second attribute.

According to an embodiment of the present disclosure, there is provided a system, including: a processing circuit; and memory, operatively connected to the processing circuit and storing instructions that, when executed by the processing circuit, cause the system to perform a method, the method including: receiving, from a first application, a first request for memory; providing a first allocation of memory to the first application; receiving, from a second application, a second request for memory; and providing a second allocation of memory to the second application, the providing of the first allocation including providing, based on a first requirement, of the first application, the first allocation from a first group of memory; the providing of the second allocation including providing, based on a second requirement, of the second application, the second allocation from a second group of memory; the second group of memory having an attribute differing from a corresponding attribute of the first group of memory; and the first requirement being different from the second requirement.

In some embodiments: the receiving, from the first application, of the first request for memory, includes receiving the first request for memory, from the first application, by a first process; and the receiving, from the second application, of the second request for memory, includes receiving the second request for memory, from the second application, by the first process.

In some embodiments: the receiving, from the first application, of the first request for memory, includes receiving the first request for memory, from the first application, by a first process; and the first process is a user space process.

In some embodiments: the receiving, from the first application, of the first request for memory, includes receiving the first request for memory, from the first application, by a first process; and the first process is a kernel space process.

In some embodiments: the first group of memory includes a first memory device; the second group of memory includes a second memory device; and the method further includes: determining, by a second process, from the first memory device, a first attribute; and determining, by the second process, from the second memory device, a second attribute.

In some embodiments: the receiving, from the first application, of the first request for memory, includes receiving the first request for memory, from the first application, by a first process; the first group of memory includes a first memory device; the second group of memory includes a second memory device; and the method further includes: determining, by a second process, from the first memory device, a first attribute; and sending, by the second process, to the first process, the first attribute.

In some embodiments: the receiving, from the first application, of the first request for memory, includes receiving the first request for memory, from the first application, by a first process; the first group of memory includes a first memory device; the second group of memory includes a second memory device; the method further includes: determining, by a second process, from the first memory device, a first attribute; and sending, by the second process, to the first process, the first attribute; the first process includes a user space process; and the second process includes a user space process.

In some embodiments: the receiving, from the first application, of the first request for memory, includes receiving the first request for memory, from the first application, by a first process; the first group of memory includes a first memory device; the second group of memory includes a second memory device; the method further includes: determining, by a second process, from the first memory device, a first attribute; and sending, by the second process, to the first process, the first attribute; the first process includes a kernel space process; and the second process includes a kernel space process.

In some embodiments: the receiving, from the first application, of the first request for memory, includes receiving the first request for memory, from the first application, by a first process; the first group of memory includes a first memory device; the second group of memory includes a second memory device; the method further includes: determining, by a second process, from the first memory device, a first attribute; and sending, by the second process, to the first process, the first attribute; the first process includes a user space process and a kernel space process; and the second process includes a user space process and a kernel space process.

According to an embodiment of the present disclosure, there is provided a system, including: means for processing; and memory, operatively connected to the means for processing and storing instructions that, when executed by the processing circuit, cause the system to perform a method, the method including: receiving, from a first application, a first request for memory; providing a first allocation of memory to the first application; receiving, from a second application, a second request for memory; and providing a second allocation of memory to the second application, the providing of the first allocation including providing, based on a first requirement, of the first application, the first allocation from a first group of memory; the providing of the second allocation including providing, based on a second requirement, of the second application, the second allocation from a second group of memory; the second group of memory having an attribute differing from a corresponding attribute of the first group of memory; and the first requirement being different from the second requirement.

### BRIEF DESCRIPTION OF THE DRAWINGS

These and other features and advantages of the present disclosure will be appreciated and understood with reference to the specification, claims, and appended drawings wherein:
FIG. 1 is a block diagram of a computing system, according to an embodiment of the present disclosure;
FIG. 2 is a block operational diagram, according to an embodiment of the present disclosure; and
FIG. 3 is a flow chart of a method, according to an embodiment of the present disclosure.

### DETAILED DESCRIPTION

The detailed description set forth below in connection with the appended drawings is intended as a description of exemplary embodiments of a system and method for heterogeneous memory provided in accordance with the present disclosure and is not intended to represent the only forms in which the present disclosure may be constructed or utilized. The description sets forth the features of the present disclosure in connection with the illustrated embodiments. It is to be understood, however, that the same or equivalent functions and structures may be accomplished by different embodiments that are also intended to be encompassed within the scope of the disclosure. As denoted elsewhere herein, like element numbers are intended to indicate like elements or features.

Computing systems may include one or more different types of memory. For example, a computing system may include one or more types of memory selected from high-bandwidth memory (HBM), double data rate dynamic random access memory (DDR DRAM), Compute Express Link^{™} (CXL) dynamic random access memory (CXL DRAM), multi-hop Compute Express Link^{™} dynamic random access memory (multi-hop CXL DRAM), Compute Express Link^{™} nonvolatile memory (CXL NVM), or hybrid Compute Express Link^{™} memory including both dynamic random access memory (DRAM) and not-AND (NAND) flash memory (CXL DRAM+NAND). The different types of memory may have different attributes, where the relevant attributes may include, for example, read (load) latency, write (store) latency, bandwidth, persistence, endurance, quality of service, nonuniform memory access (NUMA) affinity, and distance.

The latency attributes may be expressed as distributions for some types of memory, in which the latency may vary, and in such a case the latency may be characterized by one or more of a mean latency, a standard deviation of the latency, and one or more measures of the tail latency (e.g., the 90^{th} percentile tail latency, or the absolute maximum tail latency). The distance of a nonuniform memory access (NUMA) memory may be specified separately for each of several processors in a multiprocessor (e.g., multi-core) system, and it may be a measure of the performance (e.g., of the latency and the bandwidth) that a particular nonuniform memory access (NUMA) memory exhibits for a particular processor, relative to the performance that the nonuniform memory access (NUMA) memory exhibits for the processor for which its performance is greatest. The nonuniform memory access (NUMA) affinity may be an indication of whether a particular nonuniform memory access memory is closest to a particular central processing unit or to a particular core.

An application running on a system with multiple different types of memory may use memory for various purposes. Some of the processing performed by such an application may, for example, require frequent repeated access to a first set of data; some of the processing may instead involve only infrequent access to a second set of data. In such a situation, the performance of the application may be better if the first set of data is stored in memory having relatively high performance and the second set of data is stored in memory having relatively low performance, than if the first set of data is stored in memory having relatively low performance and the second set of data is stored in memory having relatively high performance.

In another example, a first application and a second application may be running concurrently on a system with multiple different types of memory. The processing performed by the first application may require frequent repeated access to first set of data, and the processing performed by the second application may involve only infrequent access to a second set of data. In such a situation, the performance of the system as a whole may be better if the first set of data is stored in memory having relatively high performance and the second set of data is stored in memory having relatively low performance, than if the first set of data is stored in memory having relatively low performance and the second set of data is stored in memory having relatively high performance. In this example, the performance of the second application may be improved by storing the second set of data in memory having relatively high performance, but, assuming that the space in this memory is sufficiently limited that it is not capable of storing both the first set of data and the second set of data, the performance improvement experienced by the second application, if the second set of data is stored in memory having relatively high performance, may be more than offset by the degradation in performance experienced by the first application, if, as a result, the first set of data is stored in memory having relatively low performance.

As such, in some embodiments, two system components, (i) a memory attribute collector, and (ii) a heterogeneous memory allocator and migrator may be used to manage allocation of memory of various types to various applications. In such an embodiment, the memory attribute collector may collect, from each of a plurality of memory devices connected to (e.g., included in) the computing system, various attributes, including, for example, performance attributes such as latency and bandwidth, and other attributes such as endurance and persistence. The memory attribute collector may communicate this information to the heterogeneous memory allocator and migrator. The heterogeneous memory allocator and migrator may then receive, from the applications running on the computing system, requests for memory (which may be referred to as memory allocation requests). The heterogeneous memory allocator and migrator may be aware of requirements that the application may specify for any such memory allocation request, e.g., as a result of the application including these requirements in the memory allocation request, or as a result of a separate, earlier communication between the application and the heterogeneous memory allocator and migrator.

The heterogeneous memory allocator and migrator may respond to each memory allocation request with an allocation of memory from a respective pool of memory (or "group" of memory), the pool being selected in a manner that balances (i) allocating memory having the highest possible performance so as to maximize the performance of the application, (ii) meeting other requirements such as persistence and endurance, and (iii) saving high-performance memory so that when needs for such memory arise it will not already be exhausted (e.g., full). Each memory "pool" or "group" may be composed of memory in one or more memory devices that have similar (e.g., identical) attributes. As such, the heterogeneity of the memory devices may be hidden from the applications, while the heterogeneity of the memory pools may be exposed to the applications.

The heterogeneous memory allocator and migrator may also perform migration of data, similarly balancing (i) using memory having the highest possible performance so as to maximize the performance of each application, (ii) meeting other requirements such as persistence and endurance, and (iii) freeing high-performance memory so that when needs for such memory arise it will be available. Migration of data may involve, for example, demoting rarely-used data to a memory pool having inferior performance (e.g., higher latency or lower bandwidth) or promoting frequently used data to a memory pool having higher performance (e.g., lower latency or higher bandwidth).

Each of the memory attribute collector and the heterogeneous memory allocator and migrator may be a process or a combination of several interacting processes. These processes may be user space processes or kernel space processes, as discussed in further detail below.

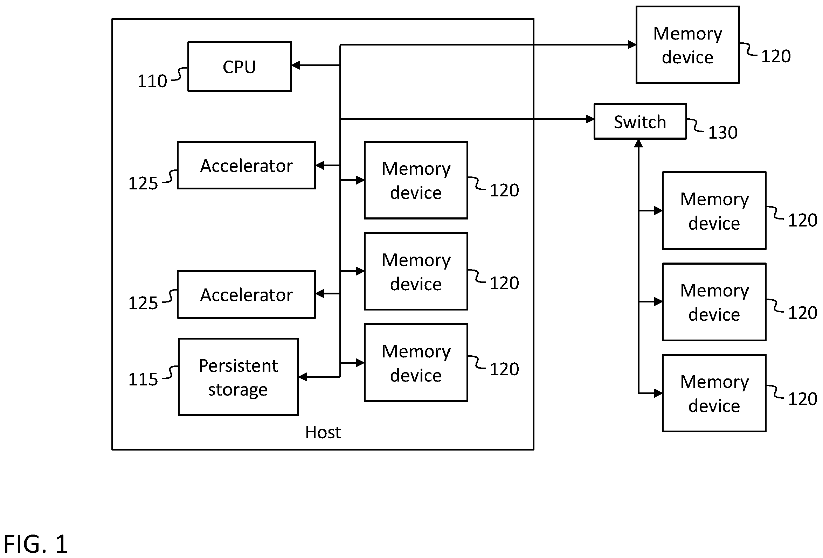

FIG. 1 is a system-level diagram of a computing system, in some embodiments. A host 105 includes a central processing unit (CPU) 110, persistent storage 115, and one or more memory devices 120. The host 105 may further include one or more accelerators (or "accelerator circuits") 125 (discussed in further detail below). Additional memory devices 120 may be connected to the host 105 without necessarily being part of the host. For example, these additional memory devices 120 may not share an enclosure with the host 105, or the additional memory devices 120 may be at some distance from the host 105, or the additional memory devices 120 may be connected to the host through a network connection, or the additional memory devices 120 may be connected to the host through a switch 130 (as discussed in further detail below). In some embodiments, the components of the host are all interconnected (e.g., by a shared bus), as illustrated; in other embodiments, one or more point-to-point connections may be used. As used herein, components that are "connected to" the host 105 may be elements of the host 105, or external elements connected to the host.

In some embodiments, the memory devices 120 are heterogeneous, e.g., they have different attributes, e.g., different performance characteristics. For example, some memory devices 120 may have high capacity and relatively poor performance (e.g., measured in terms of latency and bandwidth), some memory devices 120 may have high bandwidth and high latency, some memory devices 120 may have low bandwidth and low latency and some memory devices 120 may have high bandwidth and low latency. Memory devices 120 having higher performance (e.g., higher bandwidth or lower latency or both) may be costlier than memory devices 120 having lower performance; as such, in some embodiments, the amount of storage provided by memory devices 120 having relatively high performance may be less than the amount of storage provided by memory devices 120 having relatively low performance.

In some embodiments, the memory devices 120 may include one or more of high-bandwidth memory (HBM), double data rate dynamic random access memory (DDR DRAM), Compute Express Link^{™} (CXL) dynamic random access memory (CXL DRAM), multi-hop Compute Express Link^{™} dynamic random access memory (multi-hop CXL DRAM), Compute Express Link^{™} nonvolatile memory (CXL NVM), or hybrid Compute Express Link^{™} memory including both dynamic random access memory (DRAM) and not-AND (NAND) flash memory (CXL DRAM+NAND). Memory devices 120 containing high bandwidth memory may be connected to the central processing unit 110 by a high bandwidth memory bus. Memory devices 120 containing double data rate dynamic random access memory may be connected to the central processing unit 110 by a double data rate bus. Memory devices 120 associated with Compute Express Link^{™} may be connected to the central processing unit 110 by a peripheral component interconnect express (PCIe) bus, or by one or more peripheral component interconnect express switches and one or more peripheral component interconnect express buses. In some embodiments, memory devices using a different protocol (e.g., a different cache-coherent protocol) are used instead of memory devices 120 associated with Compute Express Link^{™}, and the connections accordingly use the different protocol.

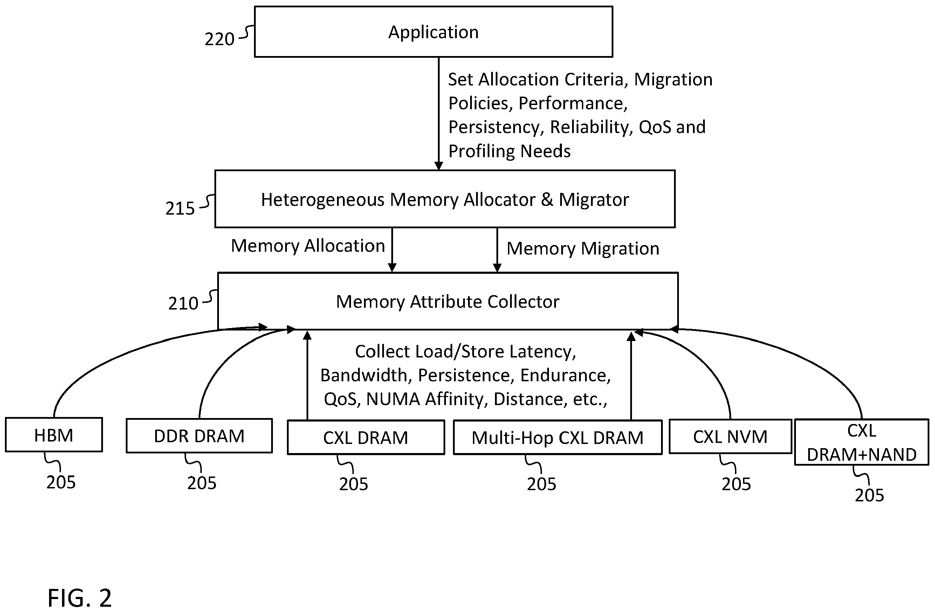

FIG. 2 shows an operational view of a system for managing pools of different (heterogeneous) memory devices. A plurality of memory pools 205 each having different attributes may be present in the system (which may be a system according to FIG. 1). The memory pools 205 may include memories with varying load and store latency and bandwidth characteristics, and may provide higher capacity memory expansion at attractive price points.

For example, the high-bandwidth memory pool 205 may include one or more high-bandwidth memory devices, the double data rate dynamic random access memory pool 205 may include one or more double data rate dynamic random access memory devices, the Compute Express Link^{™} dynamic random access memory pool 205 may include one or more Compute Express Link^{™} dynamic random access memory devices, the multi-hop Compute Express Link^{™} dynamic random access memory pool 205 may include one or more multi-hop Compute Express Link^{™} dynamic random access memory devices, the Compute Express Link^{™} nonvolatile memory pool 205 may include one or more Compute Express Link^{™} nonvolatile memory devices, and the hybrid Compute Express Link^{™} memory pool 205 may include one or more hybrid Compute Express Link^{™} memory devices each including both dynamic random access memory and not-AND flash memory.

In the system of FIG. 2, a memory attribute collector 210 may collect attributes from each of the memory devices 120 connected to the system, and forward this information to a heterogeneous memory allocator and migrator 215. The memory attribute collector 210 may collect attributes such as load/store latency, bandwidth, persistence, endurance, quality of service (QoS), nonuniform memory access (NUMA) affinity, distance, and the like.

The heterogeneous memory allocator and migrator 215 may expose multiple pools of memory to applications 220 running on the host 105. Each application 220 may have certain requirements on the memory to be allocated to it or on the memory to which its data may be migrated, e.g., it may set policies and options based on its need for memory from each pool. For example, an application 220 may set a migration policy specifying that new allocations of memory to the application 220 should be in increments having a first minimum size (e.g., one gigabyte (GB)) and that migration of data from one memory pool to another may be performed at finer granularity, e.g., a quantity of data that is at least a second minimum size (smaller than the first minimum size, e.g., 4 kilobytes (kB)) may be eligible for migration from one memory pool to another. As an example of an option that may be specified by an application 220, the application 220 may specify, when requesting an allocation of memory, that the allocated memory be persistent. Each application 220 may set allocation criteria, migration policies, performance, persistency, reliability, quality of service, and profiling needs.

Memory allocation and migration criteria may include contiguous region size, fragmentation threshold, paging or segment sizes, and the like. For example, allocations of memory may be performed in 1 GB increments, and migrations of data from one memory pool to another may be performed in 4 kB increments. Fragmentation thresholds may be specified, for example, as a limit on the maximum number of non-contiguous pieces into which a data unit (e.g., a file or an array) may be divided when stored. Performance requirements set by an application 220 may include average latency and bandwidth requirements for reads (load operations) and writes (store operations).

Reliability options specified by an application 220 may include choosing between the different failure domains provided and recovery options. For example, an application 220 may specify that the memory being allocated to the application 220 have a failure rate less than a set threshold, or that data recovery be available in case of a failure.

Quality of service (QoS) setting may include tail latency requirement setting and the ability to request throttling features, by the application 220, if the load is heavy. For example, an application 220 may specify that the memory being allocated to the application 220 have a tail latency not exceeding a set maximum acceptable latency, or that the fraction of load or store operations exhibiting a latency exceeding the maximum acceptable latency be less than a set fraction. As an example of throttling, the application 220 may specify that (i) when the performance (e.g., latency or bandwidth) of memory accesses begins to degrade as a result of increased activity of the applications 220 running on the host, all applications 220 be throttled (e.g., that the number of memory accesses per unit time, or the total rate of data access, or both, be capped for applications 220) to avoid any application 220 experiencing severely degraded performance, or that (ii) when the performance (e.g., latency or bandwidth) of memory accesses begins to degrade as a result of the activity of the applications 220 running on the host, the application 220 not be throttled, and that other applications 220 be throttled as needed so as to avoid a degradation of the performance experienced by the application 220.

Persistency requirements and memory access and performance profiling features may also be provided and enabled by applications 220 as needed. For example, an application 220 may specify, for a particular memory allocation request, that the memory allocated in the response to the request be nonvolatile (e.g., persistent).

Data migration may be performed as follows. The heterogeneous memory allocator and migrator 215 may choose different paths for different granularity, such as (i) software-based memory copies, (ii) direct memory access (DMA) transfers, or (iii) migration performed with the aid of the accelerator circuits 125 (FIG. 1), which may be or include special hardware engines or data movement accelerators.

The memory attribute collector 210 may collect, both at one time and periodically, information from the underlying memory devices 120 and their topologies in the system and feed it to the heterogeneous memory allocator and migrator 215, on demand (e.g., in response to a request received by the memory attribute collector 210 from the heterogeneous memory allocator and migrator 215), or periodically, or as needed (e.g., in response to the memory attribute collector 210 having detected that the heterogeneous memory allocator and migrator 215 has a need for the information).

The information collected from a memory device 120 may include various attributes advertised by the memory device 120, including performance, persistence, endurance characteristics and periodic device load for quality of service.

The information may further include information related to frequency of access (or "hotness") of data stored in the memory device 120, for memory devices 120 that provide tracking and collection of frequency of access information (for example, some memory devices may collect and track accesses to memory regions and have the ability to be queried and to respond with regions of memory and their respective heatmaps (access frequency maps), or the list of hottest (most frequently accessed) memory regions of the device).

The information may further include information related to memory access tracing or performance profiling with assistance from memory devices 120 that provide such features. Memory access tracing may involve capturing a time-stamped record of accesses to a region of memory or to a particular memory address. Memory performance profiling may involve capturing a history of access latencies and data rates, e.g., as an average for a memory device 120 as a whole, or for a specified time interval, or for a region of memory within the memory device 120.

The heterogeneous memory allocator and migrator 215 may allocate memory as per user setting (e.g., as per the policies and options of the application 220) and underlying characteristics of the memory devices 120. The heterogeneous memory allocator and migrator 215 may migrate memory regions between the different memory devices, e.g., to optimize memory costs while maintaining the application's performance and quality of service requirements.

The heterogeneous memory allocator and migrator 215 may use frequency of access information, for the memory, from the memory attribute collector 210, to determine which regions to migrate, when to migrate those regions, and where to migrate those regions. The heterogeneous memory allocator and migrator 215 may use machine learning or artificial intelligence techniques such as decision trees and reinforcement learning for the placement and migration decisions.

Each of the memory attribute collector 210 and the heterogeneous memory allocator and migrator 215 may be implemented using one or more processes, e.g., the heterogeneous memory allocator and migrator 215 may be implemented as a first process, and the memory attribute collector 210 may be implemented as a second process. For example, the memory attribute collector 210 may be implemented as one or more user space processes, or as a combination of one or more user space processes and one or more kernel space processes. In some embodiments, the memory attribute collector 210 is implemented as a kernel space process sending information to a user space process.

Similarly, the heterogeneous memory allocator and migrator 215 may be implemented as one or more user space processes, or as a combination of one or more user space processes and one or more kernel space processes. In some embodiments, the heterogeneous memory allocator and migrator 215 is implemented as a kernel space process, and the memory attribute collector 210 is also implemented as a kernel space process. In some embodiments, the heterogeneous memory allocator and migrator 215 is implemented as a combination of a kernel space process and a user space process, and the memory attribute collector 210 is implemented as a combination of a kernel space process and a user space process. As used herein, a "process" may include a plurality of processes; e.g., a plurality of processes configured to exchange information with each other are a "process" as that term is used herein.

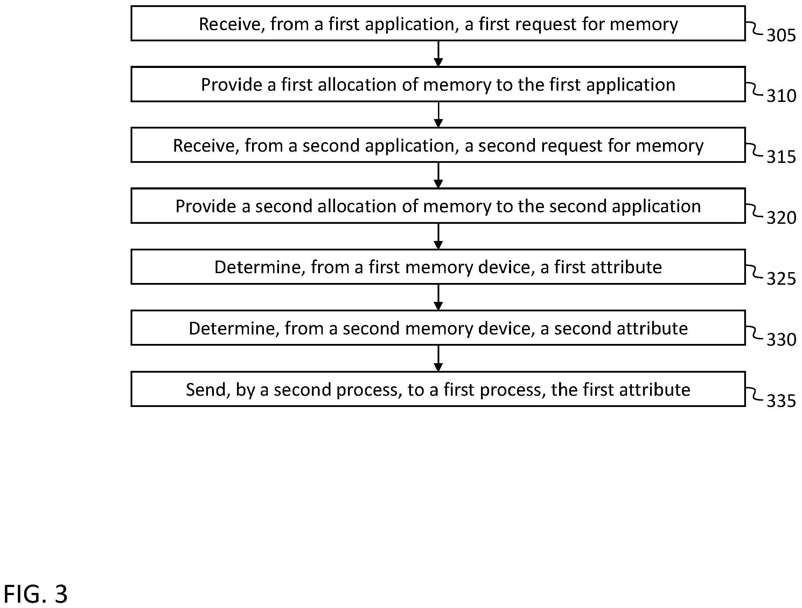

FIG. 3 is a flowchart of a method, in some embodiments. The method includes, receiving, at 305, from a first application, a first request for memory; providing, at 310, a first allocation of memory to the first application; receiving, at 315, from a second application, a second request for memory; and providing, at 320, a second allocation of memory to the second application.

The providing of the first allocation may include providing, based on a first requirement, of the first application, the first allocation from a first group of memory; and the providing of the second allocation may include providing, based on a second requirement, of the second application, the second allocation from a second group of memory. The second group of memory may have an attribute differing from a corresponding attribute of the first group of memory; and the first requirement may be different from the second requirement.

The method further includes determining, at 325, by a second process, from the first memory device, a first attribute; and determining, at 330, by the second process, from the second memory device, a second attribute. In some embodiments, the receiving, from the first application, of the first request for memory, includes: receiving the first request for memory, from the first application, by a first process, and the method further includes sending, at 335, by the second process, to the first process, the first attribute.

As used herein, "a portion of" something means "at least some of" the thing, and as such may mean less than all of, or all of, the thing. As such, "a portion of" a thing includes the entire thing as a special case, i.e., the entire thing is an example of a portion of the thing. As used herein, when a second quantity is "within Y" of a first quantity X, it means that the second quantity is at least X-Y and the second quantity is at most X+Y. As used herein, when a second number is "within Y%" of a first number, it means that the second number is at least (1-Y/100) times the first number and the second number is at most (1+Y/100) times the first number. As used herein, the term "or" should be interpreted as "and/or", such that, for example, "A or B" means any one of "A" or "B" or "A and B".

The background provided in the Background section of the present disclosure section is included only to set context, and the content of this section is not admitted to be prior art. Any of the components or any combination of the components described (e.g., in any system diagrams included herein) may be used to perform one or more of the operations of any flow chart included herein. Further, (i) the operations are example operations, and may involve various additional steps not explicitly covered, and (ii) the temporal order of the operations may be varied.

Each of the terms "processing circuit" and "means for processing" is used herein to mean any combination of hardware, firmware, and software, employed to process data or digital signals. Processing circuit hardware may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processing circuit, as used herein, each function is performed either by hardware configured, i.e., hard-wired, to perform that function, or by more general-purpose hardware, such as a CPU, configured to execute instructions stored in a non-transitory storage medium. A processing circuit may be fabricated on a single printed circuit board (PCB) or distributed over several interconnected PCBs. A processing circuit may contain other processing circuits; for example, a processing circuit may include two processing circuits, an FPGA and a CPU, interconnected on a PCB.

As used herein, when a method (e.g., an adjustment) or a first quantity (e.g., a first variable) is referred to as being "based on" a second quantity (e.g., a second variable) it means that the second quantity is an input to the method or influences the first quantity, e.g., the second quantity may be an input (e.g., the only input, or one of several inputs) to a function that calculates the first quantity, or the first quantity may be equal to the second quantity, or the first quantity may be the same as (e.g., stored at the same location or locations in memory as) the second quantity.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the spirit and scope of the inventive concept.

The terminology used herein is for the purpose of describing particular embodiments only and is not intended to be limiting of the inventive concept. As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

It will be understood that when an element or layer is referred to as being "on", "connected to", "coupled to", or "adjacent to" another element or layer, it may be directly on, connected to, coupled to, or adjacent to the other element or layer, or one or more intervening elements or layers may be present. In contrast, when an element or layer is referred to as being "directly on", "directly connected to", "directly coupled to", or "immediately adjacent to" another element or layer, there are no intervening elements or layers present.

Any numerical range recited herein is intended to include all sub-ranges of the same numerical precision subsumed within the recited range. For example, a range of "1.0 to 10.0" or "between 1.0 and 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Similarly, a range described as "within 35% of 10" is intended to include all subranges between (and including) the recited minimum value of 6.5 (i.e., (1 - 35/100) times 10) and the recited maximum value of 13.5 (i.e., (1 + 35/100) times 10), that is, having a minimum value equal to or greater than 6.5 and a maximum value equal to or less than 13.5, such as, for example, 7.4 to 10.6. Any maximum numerical limitation recited herein is intended to include all lower numerical limitations subsumed therein and any minimum numerical limitation recited in this specification is intended to include all higher numerical limitations subsumed therein.

Some embodiments may include features of the following numbered statements.
1. A method, comprising:
   receiving, from a first application, a first request for memory;
   providing a first allocation of memory to the first application;
   receiving, from a second application, a second request for memory; and
   providing a second allocation of memory to the second application,
   the providing of the first allocation comprising providing, based on a first requirement, of the first application, the first allocation from a first group of memory;
   the providing of the second allocation comprising providing, based on a second requirement, of the second application, the second allocation from a second group of memory;
   the second group of memory having an attribute differing from a corresponding attribute of the first group of memory; and
   the first requirement being different from the second requirement.
2. The method of statement 1 or statement 2, wherein:
   the receiving, from the first application, of the first request for memory, comprises receiving the first request for memory, from the first application, by a first process; and
   the receiving, from the second application, of the second request for memory, comprises receiving the second request for memory, from the second application, by the first process.
3. The method of any one of the preceding statements, wherein:
   the receiving, from the first application, of the first request for memory, comprises receiving the first request for memory, from the first application, by a first process; and
   the first process is a user space process.
4. The method of any one of the preceding statements, wherein:
   the receiving, from the first application, of the first request for memory, comprises receiving the first request for memory, from the first application, by a first process; and
   the first process is a kernel space process.
5. The method of any one of the preceding statements, wherein:
   the first group of memory comprises a first memory device;
   the second group of memory comprises a second memory device; and
   the method further comprises:
      determining, by a second process, from the first memory device, a first attribute; and
      determining, by the second process, from the second memory device, a second attribute.
6. The method of any one of the preceding statements, wherein:
   the receiving, from the first application, of the first request for memory, comprises receiving the first request for memory, from the first application, by a first process;
   the first group of memory comprises a first memory device;
   the second group of memory comprises a second memory device; and
   the method further comprises:
      determining, by a second process, from the first memory device, a first attribute; and
      sending, by the second process, to the first process, the first attribute.
7. The method of any one of the preceding statements, wherein:
   the receiving, from the first application, of the first request for memory, comprises receiving the first request for memory, from the first application, by a first process;
   the first group of memory comprises a first memory device;
   the second group of memory comprises a second memory device;
   the method further comprises:
      determining, by a second process, from the first memory device, a first attribute; and
      sending, by the second process, to the first process, the first attribute;
   the first process comprises a user space process; and
   the second process comprises a user space process.
8. The method of any one of the preceding statements, wherein:
   the receiving, from the first application, of the first request for memory, comprises receiving the first request for memory, from the first application, by a first process;
   the first group of memory comprises a first memory device;
   the second group of memory comprises a second memory device;
   the method further comprises:
      determining, by a second process, from the first memory device, a first attribute; and
      sending, by the second process, to the first process, the first attribute;
   the first process comprises a kernel space process; and
   the second process comprises a kernel space process.
9. The method of any one of the preceding statements, wherein:
   the receiving, from the first application, of the first request for memory, comprises receiving the first request for memory, from the first application, by a first process;
   the first group of memory comprises a first memory device;
   the second group of memory comprises a second memory device;
   the method further comprises:
      determining, by a second process, from the first memory device, a first attribute; and
      sending, by the second process, to the first process, the first attribute;
   the first process comprises a user space process and a kernel space process; and
   the second process comprises a user space process and a kernel space process.
10. The method of any one of the preceding statements, wherein:
   the first group of memory comprises a first memory device;
   the second group of memory comprises a second memory device; and
   the method further comprises:
      determining, from the first memory device, a first attribute; and
      determining, from the second memory device, a second attribute.
11. A system, comprising:
   a processing circuit; and
   memory, operatively connected to the processing circuit and storing instructions that, when executed by the processing circuit, cause the system to perform a method, the method comprising:
      receiving, from a first application, a first request for memory;
      providing a first allocation of memory to the first application;
      receiving, from a second application, a second request for memory; and
      providing a second allocation of memory to the second application,
   the providing of the first allocation comprising providing, based on a first requirement, of the first application, the first allocation from a first group of memory;
   the providing of the second allocation comprising providing, based on a second requirement, of the second application, the second allocation from a second group of memory;
   the second group of memory having an attribute differing from a corresponding attribute of the first group of memory; and
   the first requirement being different from the second requirement.
12. The system of statement 11, wherein:
   the receiving, from the first application, of the first request for memory, comprises receiving the first request for memory, from the first application, by a first process; and
   the receiving, from the second application, of the second request for memory, comprises receiving the second request for memory, from the second application, by the first process.
13. The system of statement 11 or statement 12, wherein:
   the receiving, from the first application, of the first request for memory, comprises receiving the first request for memory, from the first application, by a first process; and
   the first process is a user space process.
14. The system of any one of statements 11 to 13, wherein:
   the receiving, from the first application, of the first request for memory, comprises receiving the first request for memory, from the first application, by a first process; and
   the first process is a kernel space process.
15. The system of any one of statements 11 to 14, wherein:
   the first group of memory comprises a first memory device;
   the second group of memory comprises a second memory device; and
   the method further comprises:
      determining, by a second process, from the first memory device, a first attribute; and
      determining, by the second process, from the second memory device, a second attribute.
16. The system of any one of statements 11 to 15, wherein:
   the receiving, from the first application, of the first request for memory, comprises receiving the first request for memory, from the first application, by a first process;
   the first group of memory comprises a first memory device;
   the second group of memory comprises a second memory device; and
   the method further comprises:
      determining, by a second process, from the first memory device, a first attribute; and
      sending, by the second process, to the first process, the first attribute.
17. The system of any one of statements 11 to 16, wherein:
   the receiving, from the first application, of the first request for memory, comprises receiving the first request for memory, from the first application, by a first process;
   the first group of memory comprises a first memory device;
   the second group of memory comprises a second memory device;
   the method further comprises:
      determining, by a second process, from the first memory device, a first attribute; and
      sending, by the second process, to the first process, the first attribute;
   the first process comprises a user space process; and
   the second process comprises a user space process.
18. The system of any one of statements 11 to 17, wherein:
   the receiving, from the first application, of the first request for memory, comprises receiving the first request for memory, from the first application, by a first process;
   the first group of memory comprises a first memory device;
   the second group of memory comprises a second memory device;
   the method further comprises:
      determining, by a second process, from the first memory device, a first attribute; and
      sending, by the second process, to the first process, the first attribute;
   the first process comprises a kernel space process; and
   the second process comprises a kernel space process.
19. The system of any one of statements 11 to 18, wherein:
   the receiving, from the first application, of the first request for memory, comprises receiving the first request for memory, from the first application, by a first process;
   the first group of memory comprises a first memory device;
   the second group of memory comprises a second memory device;
   the method further comprises:
      determining, by a second process, from the first memory device, a first attribute; and
      sending, by the second process, to the first process, the first attribute;
   the first process comprises a user space process and a kernel space process; and
   the second process comprises a user space process and a kernel space process.
20. A system, comprising:
   means for processing; and
   memory, operatively connected to the means for processing and storing instructions that, when executed by the processing circuit, cause the system to perform a method, the method comprising:
      receiving, from a first application, a first request for memory;
      providing a first allocation of memory to the first application;
      receiving, from a second application, a second request for memory; and
      providing a second allocation of memory to the second application,
   the providing of the first allocation comprising providing, based on a first requirement, of the first application, the first allocation from a first group of memory;
   the providing of the second allocation comprising providing, based on a second requirement, of the second application, the second allocation from a second group of memory;
   the second group of memory having an attribute differing from a corresponding attribute of the first group of memory; and
   the first requirement being different from the second requirement.

Although exemplary embodiments of a system and method for heterogeneous memory have been specifically described and illustrated herein, many modifications and variations will be apparent to those skilled in the art. Accordingly, it is to be understood that a system and method for heterogeneous memory constructed according to principles of this disclosure may be embodied other than as specifically described herein. The invention is also defined in the following claims, and equivalents thereof.

## Claims

1. A method, comprising:
receiving, from a first application, a first request for memory;
providing a first allocation of memory to the first application;
receiving, from a second application, a second request for memory; and
providing a second allocation of memory to the second application,
the providing of the first allocation comprising providing, based on a first requirement, of the first application, the first allocation from a first group of memory;
the providing of the second allocation comprising providing, based on a second requirement, of the second application, the second allocation from a second group of memory;
the second group of memory having an attribute differing from a corresponding attribute of the first group of memory; and
the first requirement being different from the second requirement.

2. The method of claim 1, wherein:
the receiving, from the first application, of the first request for memory, comprises receiving the first request for memory, from the first application, by a first process; and
the receiving, from the second application, of the second request for memory, comprises receiving the second request for memory, from the second application, by the first process.

3. The method of claim 1, wherein:
the receiving, from the first application, of the first request for memory, comprises receiving the first request for memory, from the first application, by a first process; and
the first process comprises a user space process.

4. The method of claim 1, wherein:
the receiving, from the first application, of the first request for memory, comprises receiving the first request for memory, from the first application, by a first process; and
the first process is a kernel space process.

5. The method of any one of claims 1 to 4, wherein:
the first group of memory comprises a first memory device;
the second group of memory comprises a second memory device; and
the method further comprises:
determining, by a second process, from the first memory device, a first attribute; and
determining, by the second process, from the second memory device, a second attribute.

6. The method of claim 1, wherein:
the receiving, from the first application, of the first request for memory, comprises receiving the first request for memory, from the first application, by a first process;
the first group of memory comprises a first memory device;
the second group of memory comprises a second memory device; and
the method further comprises:
determining, by a second process, from the first memory device, a first attribute; and
sending, by the second process, to the first process, the first attribute.

7. The method of claim 1, wherein:
the receiving, from the first application, of the first request for memory, comprises receiving the first request for memory, from the first application, by a first process;
the first group of memory comprises a first memory device;
the second group of memory comprises a second memory device;
the method further comprises:
determining, by a second process, from the first memory device, a first attribute; and
sending, by the second process, to the first process, the first attribute;
the first process comprises a user space process; and
the second process comprises a user space process.

8. The method of claim 1, wherein:
the receiving, from the first application, of the first request for memory, comprises receiving the first request for memory, from the first application, by a first process;
the first group of memory comprises a first memory device;
the second group of memory comprises a second memory device;
the method further comprises:
determining, by a second process, from the first memory device, a first attribute; and
sending, by the second process, to the first process, the first attribute;
the first process comprises a kernel space process; and
the second process comprises a kernel space process.

9. The method of claim 1, wherein:
the receiving, from the first application, of the first request for memory, comprises receiving the first request for memory, from the first application, by a first process;
the first group of memory comprises a first memory device;
the second group of memory comprises a second memory device;
the method further comprises:
determining, by a second process, from the first memory device, a first attribute; and
sending, by the second process, to the first process, the first attribute;
the first process comprises a user space process and a kernel space process; and
the second process comprises a user space process and a kernel space process.

10. The method of claim 1, wherein:
the first group of memory comprises a first memory device;
the second group of memory comprises a second memory device; and
the method further comprises:
determining, from the first memory device, a first attribute; and
determining, from the second memory device, a second attribute.

11. A system, comprising:
a processing circuit; and
memory, operatively connected to the processing circuit and storing instructions that, when executed by the processing circuit, cause the system to perform the method according to any one of claims 1 to 10.
